# EUROPÄISCHE PATENTSCHRIFT

(11) **EP 1 135 583 B1**
(45) Veröffentlichungstag und Bekanntmachung des Hinweises auf die Patenterteilung: **15.12.2004**
(21) Anmeldenummer: 99958142.4
(22) Anmeldetag: 01.12.1999
(51) Int. Cl.: F02B 23/10

(54) **DIREKTEINSPRITZENDE BRENNKRAFTMASCHINE**
DIRECT INJECTION INTERNAL COMBUSTION ENGINE
MOTEUR A COMBUSTION INTERNE A INJECTION DIRECTE

(30) Priorität: 04.12.1998 DE 19856016
(43) Veröffentlichungstag der Anmeldung: 26.09.2001
(73) Patentinhaber: AUDI AG, 85045 Ingolstadt (DE)
(72) Erfinder: OTTOWITZ, Alfred, D-85084 Reichertshofen (DE); WURMS, Rainer, D-85101 Lenting (DE); BUDACK, Ralf, D-85057 Ingolstadt (DE); RIEGER, Thomas, D-85055 Ingolstadt (DE); SERIFSOY, Murat, D-85051 Ingolstadt (DE)
(86) Internationale Anmeldenummer: PCT/EP1999/009311
(87) Internationale Veröffentlichungsnummer: WO 2000/034633

(56) Entgegenhaltungen:
- EP-A- 0 824 185
- WO-A-99/45249
- DE-A- 3 904 760
- DE-A- 19 809 066

## Beschreibung

Die vorliegende Erfindung betrifft eine direkteinspritzende Brennkraftmaschine, die pro Zylinder wenigstens ein Einlaßventil, wenigstens ein Auslaßventil, eine im wesentlichen koaxiale Zündeinrichtung, ein Einspritzventil und einen Kolben mit einer Brennraummulde aufweist, wobei das Einspritzventil einlaßseitig angeordnet ist.

Ferner betrifft die vorliegende Erfindung ein Verfahren zur Gemischaufbereitung und Verbrennung bei einer solchen direkteinspritzenden Brennkraftmaschine.

Aus der Druckschrift DE 197 41 380 A1 ist eine gattungsbildende Hubkolben-Brennkraftmaschine mit Kraftstoffdirekteinspritzung über eine einlaßseitig angeordnete Kraftstoffeinspritzdüse bekannt. Diese Brennkraftmaschine weist einen dachförmigen Kolbenboden sowie eine dachförmige Zylinderdecke auf. Im Kolbenboden ist eine zentrale kalottenförmige Ausdehnung angeordnet, die sich weitgehend symmetrisch über die beiden Dachflächen des Kolbenbodens erstreckt. In der Zylinderdecke ist zwischen den Gaseinlaßventilen eine Kraftstoffeinspritzdüse angeordnet, die unter einem sehr flachen Winkel in den Brennraum mündet.

Aus der DE 39 04 760 A1 ist eine Hubkolben-Brennkraftmaschine mit Kraftstoffdirekteinspritzung bekannt mit einer zwischen Zündkerze und Auslaßseite ausgebildeten Brennraummulde, bei der die Brennraummulde sowohl an ihrer zur Einlaßseite als auch an ihrer zur Auslaßseite ausgebildeten Brennraumwand gleichermaßen steil verläuft.

Aus der EP 0 824 185 A2 ist eine direkteinspritzende Brennkraftmaschine bekannt, bei der die Kraftstoffeinspritzdüse einlaßseitig ausgebildet ist und schräg in Richtung der ebenfalls schräg zur Zylinderachse ausgebildeten Zündkerze gerichtet ist. Zwischen Zündkerze und Auslaßseite ist eine Brennraummulde ausgebildet, die an ihrer einlaßseitigen Begrenzungswand sehr flach und an ihrer auslaßseitigen Begrenzungswand sehr steil verläuft.

Die Druckschriften WO99/45249 und WO99/53179 gehören zum Stand der Technik gemäß Artikel 54 (3) EPÜ und zeigen direkteinspritzende Brennkraftmaschinen, bei denen der Kraftstoff nicht vor die tumbleförmige Frischluft eingespritzt wird.

Ausgehend von diesem Stand der Technik ist es Aufgabe der vorliegenden Erfindung, eine verbesserte direkteinspritzende Brennkraftmaschine sowie ein Verfahren zur Gemischaufbereitung und Verbrennung zu konzipieren, welche sich im homogenen Magerbetrieb und im geschichteten Magerbetrieb durch einen geringen Kraftstoffverbrauch sowie durch geringe Abgasemissionen auszeichnen.

Zur Lösung dieser Aufgabe ist das Zentrum der im Kolben befindlichen Brennraummulde gegenüber der Achse des Zylinders in Richtung zur Seite des wenigstens einen Auslaßventils deutlich versetzt angeordnet und verläuft die einlaßseitige Begrenzungswand der Brennraummulde in einer Projektion entlang der Achse des Zylinders zwischen der Zündeinrichtung und dem Einspritzventil. Durch diese Ausbildung der Brennraummulde wird das Gemisch in besonders effektiver Weise innerhalb des Brennraums aufbereitet und eine Verbrennung mit geringen Schadstoffwerten realisiert. Dazu wird die tumbleförmig in den Brennraum einströmende Frischluft, welche durch die von den benachbarten Einlaßventilen beherrschten Einlaßöffnungen eintritt und an der den Einlaßventilen gegenüberliegenden Zylinderwand nach unten in Richtung auf den Kolben zuströmt, und der Kraftstoff, welcher je nach Betriebszustand der Brennkraftmaschine früher oder später durch das Einspritzventil eingespritzt wird, mittels der zur Auslaßseite versetzten Brennraummulde homogen durchmischt oder aber als geschichtete Ladung aufbereitet, und mittels der einlaßseitigen Begrenzungswand der Brennraummulde nahe der Achse des Zylinders zur Zündeinrichtung umgelenkt und dort gezündet. Das aufbereitete Gemisch wird somit direkt aus der Brennraummulde heraus zur Zündeinrichtung bewegt und nicht erst noch an der Zylinderwand und/oder der Decke des Brennraums entlang geführt, bis es schließlich zur Zündeinrichtung gelangt. Ist die auslaßseitige Begrenzungswand der Brennraummulde nahe der Achse des Zylinders zum Boden des Kolbens hin sanft auslaufend und die einlaßseitige Begrenzungswand der Brennraummulde fern der Achse des Zylinders zum Boden des Kolbens hin steil auslaufend ausgebildet, so kann die Frischluftströmung optimal an der auslaßseitigen Begrenzungswand in die Brennraummulde einlaufen und beim Austreten aus der Brennraummulde an der einlaßseitigen Begrenzungswand in optimaler Weise in Richtung zur Zündeinrichtung umgelenkt werden.

Zur Unterstützung der tumbleförmigen Frischluftströmung sollten bei zwei Einlaßventilen, die Ventiltellermitten der Einlaßventile gemäß einer vorteilhaften Weiterbildung der Erfindung einen maximalen Abstand zueinander aufweisen und in Schließstellung einen minimalen Abstand zur Achse der Kurbelwelle aufweisen. Dieses Merkmal begünstigt außerdem die Unterbringung des Einspritzventils zwischen den Einlaßventilen.

Das Einspritzventil sollte in einem Winkel von ca. 30 bis 80 Grad zur Achse des Zylinders geneigt angeordnet sein, damit der Bereich der einlaßseitigen Begrenzungswand der Brennraummulde nahe der Achse des Zylinders von dem eingespritzten Kraftstoff erreichbar ist.

Zudem sollte das Einspritzventil eine mittlere Strahlachse aufweisen, die unter einem Winkel von ca. 55 bis 70 Grad zur Achse des Zylinders verläuft, damit die Strahlführung innerhalb des Brennraums zur Achse des Zylinders verhältnismäßig steil ist.

Für den homogenen Magerbetrieb spritzt das Einspritzventil während des Ansaugtaktes je nach Drehzahl bei einem Kurbelwellenwinkel von ca. 380 bis 160 Grad, bevor der Kolben den oberen Totpunkt erreicht, Kraftstoff in den Zylinder ein. Auf diese Weise wird der Kraftstoff etwa mittig in die im Brennraum vorherrschende Frischluftströmung eingebracht, so daß der Kraftstoff und die Frischluft homogen durchmischt werden können.

Und für den geschichteten Magerbetrieb spritzt das Einspritzventil während des Kompressionstaktes bei einem Kurbelwellenwinkel von ca. 120 bis 20 Grad, bevor der Kolben den oberen Totpunkt erreicht, Kraftstoff in den Zylinder ein. Somit wird der Kraftstoff größtenteils vor die tumbleförmige Frischluftströmung eingespritzt, durch die Frischluftströmung oberhalb der den Einspritzventilen nahen Begrenzungswand in einer zündfähigen Ladungswolke stabilisiert und schließlich zur Zündeinrichtung transportiert. Dabei dient die einlaßseitige Begrenzungswand der Brennraummulde sowohl zur Führung bzw. Bündelung der tumbleförmigen Frischluftströmung wie auch zur Umlenkung der sich ausbildenden zündfähigen Gemischwolke.

Bevorzugt macht die Weite der Brennraummulde ca. zwei Drittel des Durchmessers des Kolbens aus. Dadurch kann die tumbleförmig einlaufende Frischluftströmung durch die Brennraummulde großflächig unterstützt werden.

Besonders bevorzugt ist die Brennraummulde dabei so weit zur Seite des wenigstens einen Auslaßventils versetzt angeordnet, daß ihr Zentrum bzw. ihr Volumenschwerpunkt vom auslaßseitigen Rand des Kolbens ca. ein Drittel des Durchmessers des Kolbens entfernt angeordnet ist. Durch dieses Merkmal liegt die auslaßseitige Begrenzungswand der Brennraummulde dicht am Rand des Kolbens, so daß sich auf der Auslaßseite des Brennraums keine großen Bereiche geringer Strömungsgeschwindigkeiten ausbilden können.

Die vorliegende Erfindung wird unter Bezugnahme auf die nachfolgenden Zeichnungsfiguren näher erläutert. Es zeigen:
- Figur 1: eine perspektivische Ansicht der Anordnung von vier Gaswechselventilen, Zündeinrichtung, Einspritzventil und Kolben einer direkteinspritzenden Brennkraftmaschine in vereinfachter Darstellung;

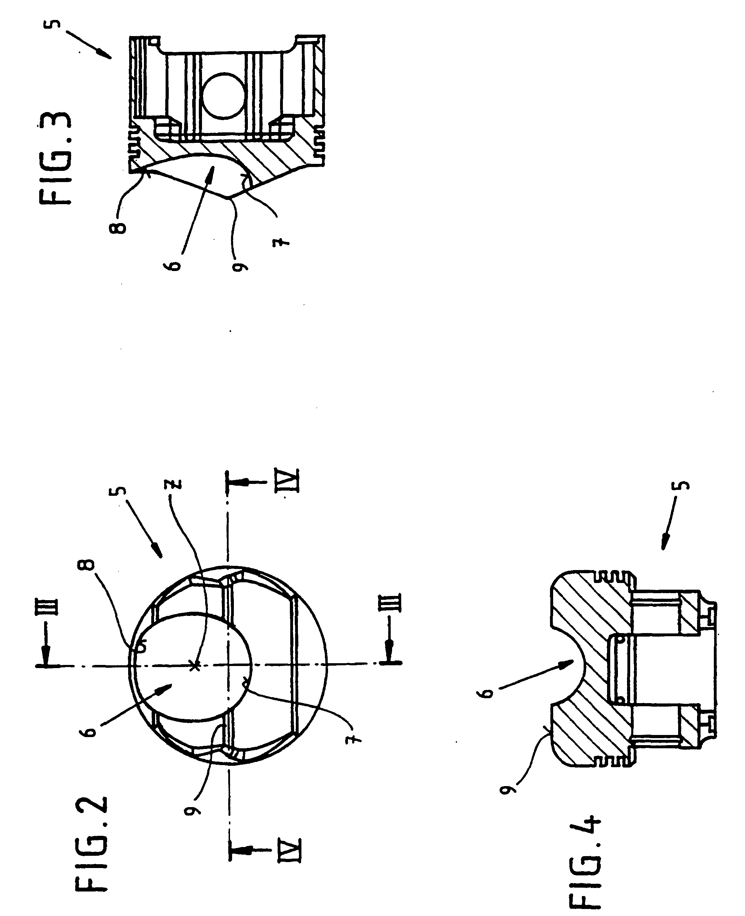

- Figur 2: eine Draufsicht des Kolbens aus Figur 1;
- Figur 3: eine entlang der Linie III-III geschnittene Ansicht des Kolbens aus Figur 2; und
- Figur 4: eine entlang der Linie IV-IV geschnittene Ansicht des Kolbens aus Figur 2.

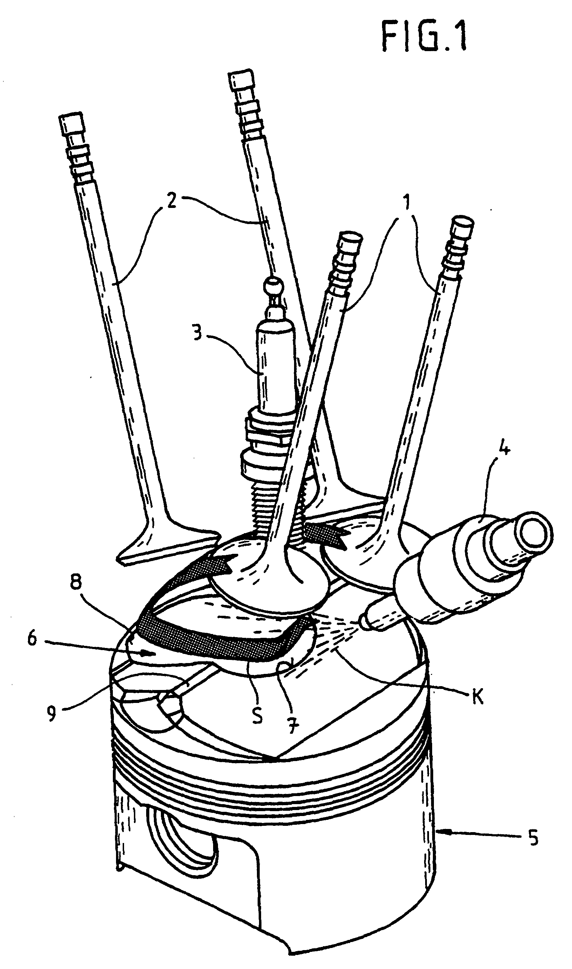

Die erfindungsgemäße Brennkraftmaschine ist gemäß Figur 1 mit zwei nebeneinander angeordneten Einlaßventilen 1 pro Zylinder ausgestattet. Diese beiden Einlaßventile 1 befinden sich auf der Einlaßseite eines nicht näher dargestellten Zylinders und zwei ebenfalls nebeneinander angeordnete Auslaßventile 2 befinden sich auf der Auslaßseite des Zylinders. Zudem weist die Brennkraftmaschine eine Zündeinrichtung 3 auf, die konzentrisch zu der Achse des Zylinders angeordnet ist. Pro Zylinder ist außerdem ein Einspritzventil 4 vorgesehen, welches zwischen den beiden Einlaßventilen 1 und dem an die beiden Einlaßventile 1 angrenzenden Abschnitt der Zylinderwand angeordnet ist. Der im Zylinder der Brennkraftmaschine angeordnete Kolben 5 weist eine Brennraummulde 6 auf, die gegenüber der Achse des Zylinders in Richtung zur Seite der beiden Auslaßventile 2 mit einem ausgeprägten Versatz angeordnet ist und eine steil verlaufende einlaßseitige Begrenzungswand 7 sowie eine flach verlaufende auslaßseitige Begrenzungswand 8 aufweist. Dabei beträgt die Weite der Brennraummulde 6 ca. zwei Drittel des Durchmessers des Kolbens 5 und liegt das Zentrum Z bzw. der Volumenschwerpunkt der Brennraummulde 6 ca. ein Drittel des Durchmessers des Kolbens 5 vom auslaßseitigen Rand des Kolbens 5 sowie ca. ein Sechstel des Durchmessers des Kolbens 5 von der Achse des Zylinders entfernt.

Die durch die beiden Einlaßventile 1 in den Zylinder einströmende Frischluft bildet innerhalb des Brennraums eine Tumbleströmung S aus. Dies wird begünstigt, wenn die beiden Einlaßventile 1 einen maximalen Abstand zueinander aufweisen. Zudem erleichtert ein maximaler Abstand zwischen den beiden Einlaßventilen 2 die Positionierung des Einspritzventils 4.

Falls die direkteinspritzende Brennkraftmaschine jedoch nur ein Einlaßventil aufweisen sollte, so kann die Tumbleströmung innerhalb des Brennraums mittels eines im Einlaßkanal angeordneten Strömungsleitmittels generiert werden.

Die tumbleförmige Frischluftströmung S läuft über die auslaßseitige Begrenzungswand 8 in die Brennraummulde 6 ein und wird beim Austreten aus der Brennraummulde 6 an der einlaßseitigen Begrenzungswand 7 in Richtung auf die Zündeinrichtung 3 umgelenkt. Da das Zentrum Z der Brennraummulde 6 hierbei gegenüber der Achse des Zylinders in Richtung zur Auslaßseite versetzt angeordnet ist und die einlaßseitige Begrenzungswand 7 der Brennraummulde 6 unterhalb der Zündeinrichtung 3 angeordnet ist, erfolgt die Gemischaufbereitung auf besonders günstige Art und Weise, weil das Gemisch direkt auf die Zündeinrichtung 3 zu bewegt wird.

Die beiden Einlaßventile 1 liegen parallel nebeneinander und sind zu der Zündeinrichtung 3 bzw. zu der Achse des Zylinders jeweils geneigt angeordnet. Die beiden Auslaßventile 2 liegen ebenfalls parallel nebeneinander und sind zu der Achse des Zylinders in entgegengesetzter Richtung wie die Einlaßventile 1 geneigt angeordnet.

Auch das Einspritzventil 4 der Brennkraftmaschine ist zu der Achse des Zylinders geneigt angeordnet, wobei der Neigungswinkel a des Einspritzventils 4 ca. 30 bis 80 Grad beträgt. Damit ist das Einspritzventil 4 zur Achse des Zylinders stärker geneigt als die benachbarten Einlaßventile 1.

Arbeitet die Brennkraftmaschine nun im homogenen Magerbetrieb, so wird durch das Einspritzventil 4 während des Ansaugtaktes 4 bei einem Kurbelwellenwinkel von ca. 380 bis 160 Grad, bevor der Kolben 5 den oberen Totpunkt erreicht, Kraftstoff in die durch die Brennraummulde 6 geführte und an der einlaßseitigen Begrenzungswand 7 umgelenkte Frischluftströmung S eingespritzt. Dadurch ergibt sich eine hohe Relativgeschwindigkeit zwischen Frischluft und Kraftstoff, so daß die Einspritzung einer ausreichenden Menge an Kraftstoff sowie eine homogene Durchmischung von Frischluft und Kraftstoff in kürzester Zeit erfolgen kann.

Arbeitet die Brennkraftmaschine dagegen im geschichteten Magerbetrieb, so wird durch das Einspritzventil 4 während des Kompressionstaktes bei einem Kurbelwellenwinkel von ca. 120 bis 20 Grad, bevor der Kolben 5 den oberen Totpunkt erreicht, Kraftstoff vor die an der einfaßseitigen Begrenzungswand 7 umgelenkte tumbleförmige Frischluft S in die Brennraummulde 6 eingespritzt. Die tumbleförmige Frischluftströmung S sorgt dafür, daß der eingespritzte Kraftstoffstrahl K sich innerhalb der Brennraummulde 6 nahe dem Einspritzventil 4 in einer zündfähigen Ladungswolke stabilisiert und durch die weitere Verdichtungsbewegung des Kolbens 5 zu der Zündeinrichtung 3 befördert wird, so daß der zündfähige Anteil der Gemischwolke von einem Zündfunken der im Zylinder koaxial angeordneten Zündeinrichtung 3 erreichbar ist.

Schließlich ist der Kolben 5 dachförmig ausgebildet und weist einen geraden Giebel 9 auf. Diese Form ist auf die zur Achse des Zylinders jeweils geneigt angeordneten Gaswechselventile 1, 2 abgestimmt und ermöglicht einen äußerst kompakten Brennraum der direkteinspritzenden Brennkraftmaschine.

## Patentansprüche

1. Direkteinspritzende Brennkraftmaschine die pro Zylinder wenigstens ein Einlassventil, wenigstens ein Auslassventil, eine im wesentlichen koaxiale Zündeinrichtung, ein Einspritzventil und einen Kolben mit einer Brennraummulde aufweist, wobei das Einspritzventil einlassseitig angeordnet ist, wobei das Zentrum der im Kolben (5) befindlichen Brennraummulde (6) gegenüber der Achse des Zylinders in Richtung zur Seite des wenigstens einen Auslassventils (2) deutlich versetzt angeordnet ist, und wobei die einlassseitige Begrenzungswand (7) der Brennraummulde (6) in einer Projektion entlang der Achse des Zylinders zwischen der Zündeinrichtung (3) und dem Einspritzventil (4) verläuft,
wobei
- die auslassseitige Begrenzungswand (8) der Brennraummulde (6) zum Boden des Kolbens (5) hin sanft ausläuft, und
- die einlassseitige Begrenzungswand (7) der Brennraummulde (6) zur Führung, zur Umlenkung und zur Bündelung tumbleförmiger Frischluft zum Boden des Kolbens (5) hin steil ausläuft,
wobei der im geschichteten Magerbetrieb eingespritzte Kraftstoff vor die an der einlassseitigen Begrenzungswand umgelenkte tumbleförmige Frischluft in der Brennraummulde eingespritzt wird.

2. Brennkraftmaschine nach Anspruch 1, **dadurch gekennzeichnet, dass** das Einspritzventil (4) unter einem Winkel (α) von ca. 30 bis 80 Grad zur Achse des Zylinders geneigt angeordnet ist.

3. Brennkraftmaschine nach einem der Ansprüche 1 oder 2, **dadurch gekennzeichnet, dass** das Einspritzventil (4) eine mittlere Strahlachse aufweist, die unter einem Winkel von ca. 55 bis 70 Grad zur Achse des Zylinders verläuft.

4. Brennkraftmaschine nach einem der Ansprüche 1 bis 3, **dadurch gekennzeichnet, dass** das Einspritzventil (4) während des Ansaugtaktes bei einem Kurbelwellenwinkel von ca. 380 bis 160 Grad, bevor der Kolben (5) den oberen Totpunkt erreicht, Kraftstoff in den Zylinder einspritzt.

5. Brennkraftmaschine nach einem der Ansprüche 1 bis 4, **dadurch gekennzeichnet, dass** das Einspritzventil (4) während des Kpmpressionstaktes bei einem Kurbelwellenwinkel von ca. 120 bis 20 Grad, bevor der Kolben (5) den oberen Totpunkt erreicht, Kraftstoff in den Zylinder einspritzt.

6. Brennkraftmaschine nach einem der Ansprüche 1 bis 5, **dadurch gekennzeichnet, dass** die Weite der Brennraummulde (6) ca. zwei Drittel des Durchmessers des Kolbens (5) ausmacht.

7. Brennkraftmaschine nach einem der Ansprüche 1 bis 6, **dadurch gekennzeichnet, dass** die Brennraummulde (6) so weit zur Seite der Auslassventile (2) versetzt angeordnet ist, dass ihr Zentrum (Z) vom Rand des Kolbens (5) ca. ein Drittel des Durchmessers des Kolbens (5) entfernt angeordnet ist.

8. Verfahren zur Gemischaufbereitung und Verbrennung bei einer direkteinspritzenden Brennkraftmaschine nach einem der Ansprüche 1 bis 7, **dadurch gekennzeichnet, dass** die tumbleförmig einströmende Frischluft an der einlassseitigen Begrenzungswand (7) der Brennraummulde (6) in Richtung zur Zündeinrichtung (3) umgelenkt wird.

9. Verfahren nach Anspruch 8, **dadurch gekennzeichnet, dass** die Zeitspanne zwischen dem Ende der Einspritzung des Kraftstoffs und dem Zünden des Kraftstoffs einem Kurbelwellenwinkel von ca. 10 bis 25 Grad entspricht.

## Claims

1. Direct-injection internal combustion engine comprising per cylinder at least one intake valve, at least one exhaust valve, a substantially coaxial ignition device, an injection valve and a piston with a combustion chamber recess, the injection valve being arranged on the intake side, the centre of the combustion chamber recess (6) situated in the piston (5) being arranged in such a manner that it is clearly offset relative to axis of the cylinder towards the side of the at least one exhaust valve (2), the boundary wall (7) of the combustion chamber recess (6) on the intake side extending in a projection along the axis of the cylinder between the ignition device (3) and the injection valve (4), the boundary wall (8) of the combustion chamber recess (6) on the exhaust side sloping gently towards the head of the piston (5), the boundary wall (7) of the combustion chamber recess (6) on the intake side sloping steeply towards the head of the piston (5) in order to guide, deflect and concentrate a tumble flow of fresh air, and the fuel injected in stratified lean-mixture operation being injected before the tumble flow of fresh air in the combustion chamber recess deflected by the boundary wall on the intake side.

2. Internal combustion engine according to claim 1, **characterised in that** the injection valve (4) is inclined at an angle (α) of approximately 30 to 80 degrees relative to the axis of the cylinder.

3. Internal combustion engine according to either of claims 1 or 2, **characterised in that** the injection valve (4) has a central spray axis extending at an angle of approximately 55 to 70 degrees relative to the axis of the cylinder.

4. Internal combustion engine according to one of claims 1 to 3, **characterised in that** the injection valve (4) injects fuel into the cylinder during the induction stroke at a crankshaft angle of approximately 380 to 160 degrees, before the piston (5) reaches top dead centre.

5. Internal combustion engine according to one of claims 1 to 4, **characterised in that** the injection valve (4) injects fuel into the cylinder during the compression stroke at a crankshaft angle of approximately 120 to 20 degrees, before the piston (5) reaches top dead centre.

6. Internal combustion engine according to one of claims 1 to 5, **characterised in that** the width of the combustion chamber recess (6) is approximately two thirds of the diameter of the piston (5).

7. Internal combustion engine according to one of claims 1 to 6, **characterised in that** the combustion chamber recess (6) is arranged in such a manner that it is offset to such an extent towards the side of the exhaust valves (2) that its centre (Z) is arranged approximately a third of the diameter of the piston (5) away from the edge of the piston (5).

8. Process for mixture preparation and combustion in a direct-injection internal combustion engine according to one of claims 1 to 7, **characterised in that** the fresh air entering in a tumble flow is deflected in the direction of the ignition device (3) by the boundary wall (7) of the combustion chamber recess (6) on the intake side.

9. Process according to claim 8, **characterised in that** the interval between the end of the injection of the fuel and the ignition of the fuel corresponds to a crankshaft angle of approximately 10 to 25 degrees.

## Revendications

1. Moteur à combustion interne à injection directe qui comporte, par cylindre, au moins une soupape d'admission, au moins une soupape d'échappement, un dispositif d'allumage sensiblement coaxial, une soupape d'injection et un piston doté d'une cuvette de chambre de combustion, la soupape d'injection étant disposée côté admission, le centre de la cuvette de chambre de combustion (6) située dans le piston (5) étant disposé de manière nettement décalée par rapport à l'axe du cylindre en direction du côté de la ou des soupapes d'échappement (2), et la paroi de délimitation située côté admission (7) de la cuvette de chambre de combustion (6) s'étendant, en projection selon l'axe du cylindre, entre le dispositif d'allumage (3) et la soupape d'injection (4),
où :
- la paroi de délimitation côté échappement (8) de la cuvette de chambre de combustion (6) se termine en pente douce vers le fond du piston (5), et
- la paroi de délimitation côté admission (7) de la cuvette de chambre de combustion (6), qui sert à guider, à défléchir et à concentrer l'air frais tournoyant, se termine en pente raide vers le fond du piston (5),
le carburant injecté lors du fonctionnement en régime pauvre stratifié étant injecté dans la cuvette de chambre de combustion avant l'air frais tournoyant défléchi par la paroi de délimitation située côté admission.

2. Moteur à combustion interne selon la revendication 1, **caractérisé en ce que** la soupape d'injection (4) est disposée obliquement à un angle (α) d'environ 30 à 80 degrés par rapport à l'axe du cylindre.

3. Moteur à combustion interne selon l'une des revendications 1 et 2, **caractérisé en ce que** la soupape d'injection (4) a un axe de jet médian qui s'étend en faisant un angle d'environ 55 à 70 degrés par rapport à l'axe du cylindre.

4. Moteur à combustion interne selon l'une des revendications 1 à 3, **caractérisé en ce que** la soupape d'injection (4) injecte du carburant dans le cylindre pendant la course d'admission lorsque l'angle de vilebrequin est d'environ 380 à 160 degrés, avant que le piston (5) atteigne le point mort haut.

5. Moteur à combustion interne selon l'une des revendications 1 à 4, **caractérisé en ce que** la soupape d'injection (4) injecte du carburant dans le cylindre pendant le temps de compression lorsque l'angle de vilebrequin est d'environ 120 à 20 degrés, avant que le piston (5) atteigne le point mort haut.

6. Moteur à combustion interne selon l'une des revendications 1 à 5, **caractérisé en ce que** l'étendue de la cuvette de chambre de combustion (6) correspond à environ deux tiers du diamètre du piston (5).

7. Moteur à combustion interne selon l'une des revendications 1 à 6, **caractérisé en ce que** la cuvette de chambre de combustion (6) est décalée vers le côté des soupapes d'échappement (2) à un point tel que son centre (Z) est éloigné du bord du piston (5) d'environ un tiers du diamètre du piston (5).

8. Procédé de préparation du mélange et de combustion, dans un moteur à combustion interne à injection directe, selon l'une des revendications 1 à 7, **caractérisé en ce que** l'air frais qui afflue en tournoyant est défléchi par la paroi de délimitation côté admission (7) de la cuvette de chambre de combustion (6) en direction du dispositif d'allumage (3).

9. Procédé selon la revendication 8, **caractérisé en ce que** le laps de temps entre la fin de l'injection du carburant et l'allumage du carburant correspond à un angle de vilebrequin d'environ 10 à 25 degrés.
